# EUROPÄISCHE PATENTANMELDUNG

(11) **EP 1 496 286 A2**
(43) Veröffentlichungstag der Anmeldung: **12.01.2005**
(21) Anmeldenummer: 04024491.5
(22) Anmeldetag: 01.12.2001
(51) Int. Cl.: F16F 13/10

(54) **Hydrolager**

(30) Priorität: 21.12.2000 DE 10064330
(62) Teilanmeldung aus: 01128669.7
(71) Anmelder: Carl Freudenberg KG, 69469 Weinheim (DE)
(72) Erfinder: West, John Philip, Kirklington Nottinghamshire NG22 8ND (GB)

(57) **Zusammenfassung**

Hydrolager, umfassend ein Traglager (1) und ein Auflager (2), die durch einen Federkörper (3) aus gummielastischem Werkstoff miteinander verbunden sind und zumindest einen Arbeitsraum (4) und zumindest einen Ausgleichsraum (5) begrenzen, wobei der Arbeits- (4) und der Ausgleichsraum (5) jeweils mit Dämpfungsflüssigkeit gefüllt und durch eine Dämpfungseinrichtung (6) flüssigkeitsleitend verbunden sind. Die Dämpfungseinrichtung (6) ist bei relativer radialer Verlagerung von Traglager (1) und Auflager (2) zueinander von der Dämpfungsflüssigkeit durchströmbar.

## Beschreibung

Die Erfindung betrifft ein Hydrolager, umfassend ein Traglager und ein Auflager, die durch einen Federkörper aus gummielastischem Werkstoff miteinander verbunden sind und zumindest einen Arbeitsraum und zumindest einen Ausgleichsraum begrenzen, wobei der Arbeits- und der Ausgleichsraum jeweils mit Dämpfungsflüssigkeit gefüllt und durch eine Dämpfungseinrichtung flüssigkeitsleitend verbunden sind.

### Stand der Technik

Solche Hydrolager sind allgemein bekannt und gelangen beispielsweise als Motorlager zur Anwendung. Die Dämpfungsrichtung erstreckt sich dabei parallel zur Achse des Hydrolagers.

### Darstellung der Erfindung

Der Erfindung liegt die Aufgabe zugrunde, ein Hydrolager der eingangs genannten Art derart weiterzuentwickeln, dass dieses zusätzlich zur Dämpfungsrichtung parallel zur Achse des Hydrolagers eine Dämpfungsrichtung aufweist, die sich in radialer Richtung erstreckt.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, dass der Arbeitsraum zumindest eine sich in axialer Richtung erstreckende, volumenveränderliche Flüssigkeitstasche aufweist. Hierbei ist von Vorteil, dass eine Dämpfung der eingeleiteten Schwingungen nicht nur in axialer Richtung sondern auch quer zur Achse des Hydrolagers erfolgt. Schwingungen, die durch Lastwechsel, Beschleunigen oder Bremsen verursacht sind, können durch ein solches Lager in ausgezeichneter Weise gedämpft werden, ebenso wie Schwingungen, die in Achsrichtung des Lagers, beispielsweise beim Überfahren von Bordsteinkanten, eingeleitet werden. Höherfrequente, kleinamplitudige Schwingungen, die beispielsweise von der Oberfläche der Fahrbahn und/oder dem Reifenprofil eines Kraftfahrzeugs eingeleitet werden, können bedarfsweise, beispielsweise bei entsprechender Ausgestaltung der Trennwand zwischen Arbeitsraum und Ausgleichsraum isoliert werden.

Bei radialen Verlagerungen des Traglagers zum Auflager wird das Volumen der Flüssigkeitstasche beispielsweise verkleinert, wobei die verdrängten Flüssigkeitsbestandteile im Ausgleichsraum aufgenommen werden. Federt das Hydrolager wieder in seine Ausgangsposition zurück und die Flüssigkeitstasche weist wieder ihr ursprüngliches Volumen auf, haben sich die zuvor verdrängten Flüssigkeitsbestandteile aus dem Ausgleichsraum, beispielsweise durch den Dämpfungskanal, wieder zurück in die Flüssigkeitstasche bewegt. Entscheidend für die Dämpfung in radialer Richtung ist, dass bei radialer Relatiwerlagerung des Traglagers zum Auflager Flüssigkeitsbestandteile aus dem Arbeitsraum durch die Dämpfungseinrichtung in den Ausgleichsraum verlagert werden. Durch die sich in axialer Richtung erstreckende, volumenveränderliche Flüssigkeitstasche ist von Vorteil, dass das Hydrolager äußerlich im Wesentlichen solchen Hydrolagern entspricht, die Schwingungen nur in Achsrichtung dämpfen.

Die Bauteile, die zur Isolierung höherfrequenter, kleinamplitudiger Schwingungen benötigt werden, beispielsweise eine Membran aus gummielastischem Werkstoff, die innerhalb eines Düsenkäfigs zwischen Arbeitsraum und Ausgleichsraum angeordnet ist, ist Stand der Technik und kann bedarfsweise vorgesehen werden, ohne dass der mit der Konstruktion von Hydrolagern betraute Fachmann erfinderisch tätig zu werden braucht.

Die Dämpfungseinrichtung kann bevorzugt durch eine Trennwand zwischen Arbeits- und Ausgleichsraum gebildet sein, wobei die Trennwand zumindest einen Dämpfungskanal aufweist. Der Dämpfungseffekt beruht darauf, dass die innerhalb des Dämpfungskanals befindliche Dämpfungsflüssigkeit phasenverschoben, bevorzugt gegenphasig zu den eingeleiteten Schwingungen hin- und herbeweglich ist. Je größer die Flüssigkeitsmasse innerhalb des Dämpfungskanals ist, desto niedriger können die zu dämpfenden Frequenzen sein.

Der Arbeits- und der Ausgleichsraum können in axialer Richtung benachbart zueinander und durch die Trennwand getrennt voneinander angeordnet sein. Dieser Aufbau entspricht im Wesentlichen dem Aufbau konventioneller Hydrolager, wobei zum Dämpfen tieffrequenter, großamplitudiger Schwingungen Dämpfungsflüssigkeit zwischen dem Arbeitsraum und dem Ausgleichsraum durch den Dämpfungskanal innerhalb der Trennwand hin- und herverlagert wird. Derartige Hydrolager bauen in radialer Richtung vergleichsweise kompakt, wobei die Länge des Dämpfungskanals beispielsweise dadurch variierbar ist, dass dieser mehrfach gewendelt innerhalb der Trennwand verläuft.

Die Flüssigkeitstasche kann beispielsweise im Wesentlichen nierenförmig ausgebildet sein und sich im Wesentlichen halbkreisförmig um den Kern des Traglagers erstrecken. Die bei Einleitung von radialen Schwingungen verdrängten Flüssigkeitsbestandteile aus der Flüssigkeitstasche entweichen aus der Flüssigkeitstasche in axialer Richtung, beispielsweise durch einen Dämpfungskanal, in die Ausgleichskammer.

Der Arbeitsraum kann zwei sich in Umfangsrichtung erstreckende volumenveränderliche Flüssigkeitstaschen aufweisen, die durch zumindest eine Drosselöffnung verbunden sind. Die Flüssigkeitstaschen können jeweils im Wesentlichen nierenförmig ausgebildet sein und sich jeweils im Wesentlichen halbkreisförmig um den Kern des Traglagers erstrecken. Zur Dämpfung radial eingeleiteter Schwingungen werden Flüssigkeitsbestandteile aus der einen Flüssigkeitstasche durch die Drosselöffnung in die andere Flüssigkeitstasche und wieder zurück verschoben. Je nachdem, wie der Strömungswiderstand der Drosselöffnung im Vergleich zum Strömungswiderstand des Dämpfungskanals ausgelegt ist, besteht die Möglichkeit, dass zusätzlich Flüssigkeitsbestandteile durch den Dämpfungskanal in den Ausgleichsraum geleitet werden.

Der Dämpfungskanal oder die Drosselöffnung können im Kern des Traglagers angeordnet sein. Hierbei ist von Vorteil, dass das Hydrolager insgesamt einen einfachen und kompakten Aufbau aufweist, da der Kern, der ohnehin vorhanden ist, als Dämpfungseinrichtung genutzt wird. Der Dämpfungskanal oder die Drosselöffnung können beispielsweise im Außenbereich des Kems spiralförmig angeordnet sein, wobei Flüssigkeitsbestandteile aus einer Flüssigkeitstasche durch den Dämpfungskanal oder die Drosselöffnung im Kern in die andere Flüssigkeitstasche geleitet werden. In radialer Richtung eingeleitete Schwingungen werden dadurch gedämpft.

Der Dämpfungskanal oder die Drosselöffnung können gewendelt im Kern verlaufen. Dadurch wird eine große Länge der Dämpfungseinrichtung bei geringem Platzbedarf erzielt, um tieffrequente, großamplitudige Schwingungen dämpfen zu können.

Nach einer Ausgestaltung besteht die Möglichkeit, dass die beiden Flüssigkeitstaschen flüssigkeitsleitend mit dem Arbeitsraum verbunden sind. Die Flüssigkeitsverlagerung zwischen den beiden Flüssigkeitstaschen erfolgt dann dadurch, dass die Dämpfungsflüssigkeit aus einer der Flüssigkeitstaschen, beispielsweise durch einen Dämpfungskanal, in den Arbeitsraum gedrückt und in gleichem Maße Dämpfungsflüssigkeit aus dem Arbeitsraum durch einen weiteren Dämpfungskanal in die zweite Flüssigkeitstasche aufgenommen wird. Ein direkter Flüssigkeitsaustausch zwischen den beiden Flüssigkeitstaschen erfolgt dann nicht. Ein solches Hydrolager läßt sich besonders gut auf die jeweiligen Gegebenheiten des Anwendungsfalles einstellen, dadurch, dass jede der Flüssigkeitstaschen durch einen Dämpfungskanal flüssigkeitsleitend mit dem Arbeitsraum verbunden ist.

Der Ausgleichsraum kann auf der der Umgebung zugewandten Seite durch eine rollbalgartig ausgebildete, im Wesentlichen drucklos Volumen aufnehmende Membran begrenzt sein. Hierbei ist von Vorteil, dass eine unerwünschte dynamische Verhärtung des Hydrolagers unterbleibt.

### Kurzbeschreibung der Zeichnungen

Mehrere Ausführungsbeispiele des erfindungsgemäßen Hydrolagers sind in den Figuren 1 bis 12 gezeigt und werden im folgenden näher beschrieben.

Diese zeigen jeweils in schematischer Darstellung:
- Fig. 1: ein erstes Ausführungsbeispiel eines Hydrolagers in längsgeschnittener Darstellung,
- Fig. 2: das Hydrolager in Fig. 1 in längsgeschnittener Darstellung um 90 ° gedreht,
- Fig. 3: das Hydrolager aus Fig. 1, geschnitten entlang der Linie A-A,
- Fig. 4: ein zweites Ausführungsbeispiel eines Hydrolagers in längsgeschnittener Darstellung,
- Fig. 5: das Hydrolager aus Fig. 4 in längsgeschnittener Darstellung um 90 ° gedreht
- Fig. 6: einen Querschnitt durch das Hydrolager aus Fig. 4 entlang der Linie B-B,
- Fig. 7: ein drittes Ausführungsbeispiel eines Hydrolagers in längsgeschnittener Darstellung,
- Fig. 8: ein viertes Ausführungsbeispiel eines erfindungsgemäßen Hydrolagers,
- Fig. 9: ein fünftes Ausführungsbeispiel in längsgeschnittener Darstellung entlang der Linie C-C aus Fig. 10,
- Fig. 10: das Hydrolager aus Fig. 9 in quergeschnittener Darstellung,
- Fig. 11: ein sechstes Ausführungsbeispiel in längsgeschnittener Darstellung,
- Fig. 12: ein siebtes Ausführungsbeispiel eines erfindungsgemäßen Hydrolagers in längsgeschnittener Darstellung,

### Ausführung der Erfindung

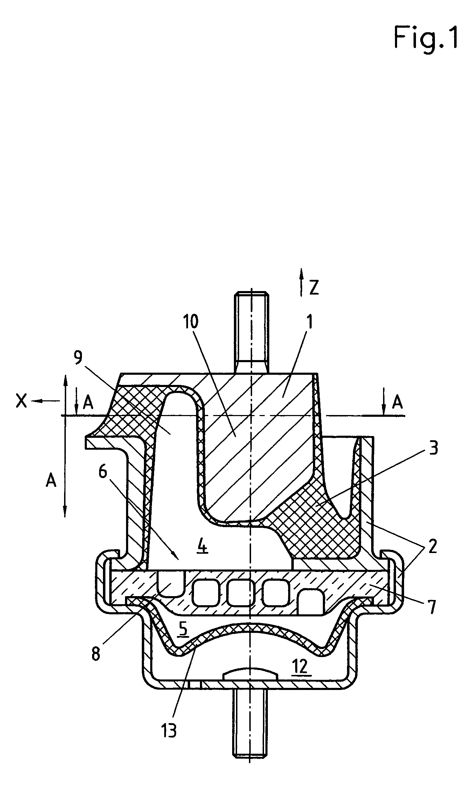

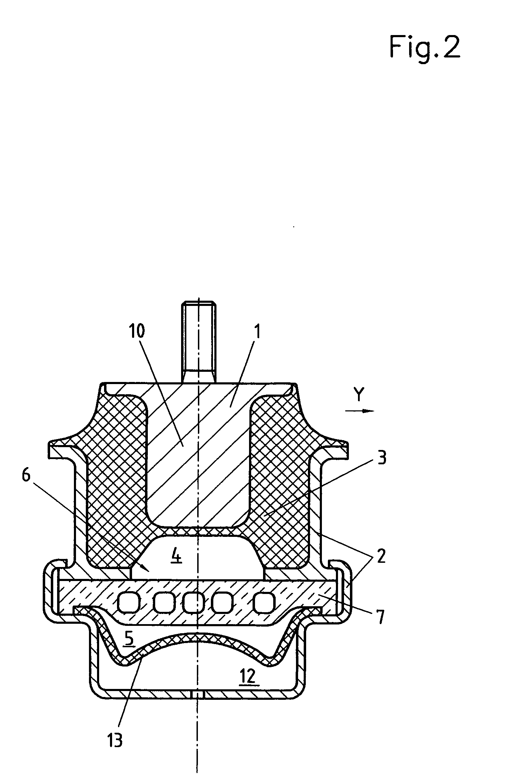

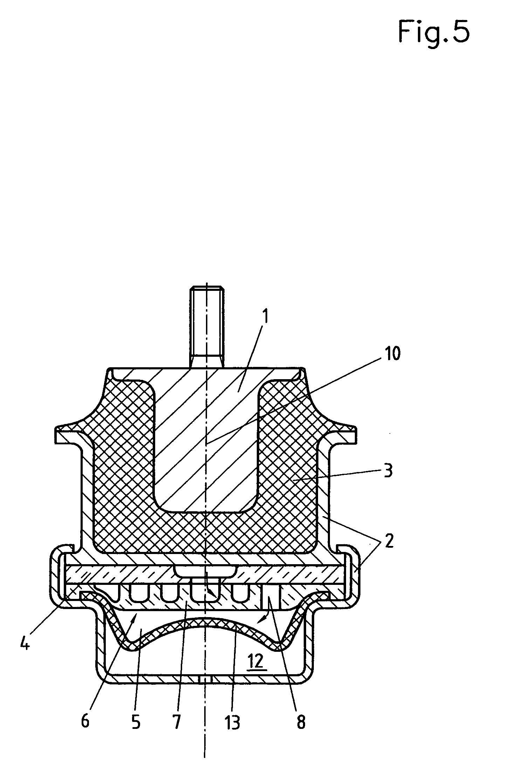

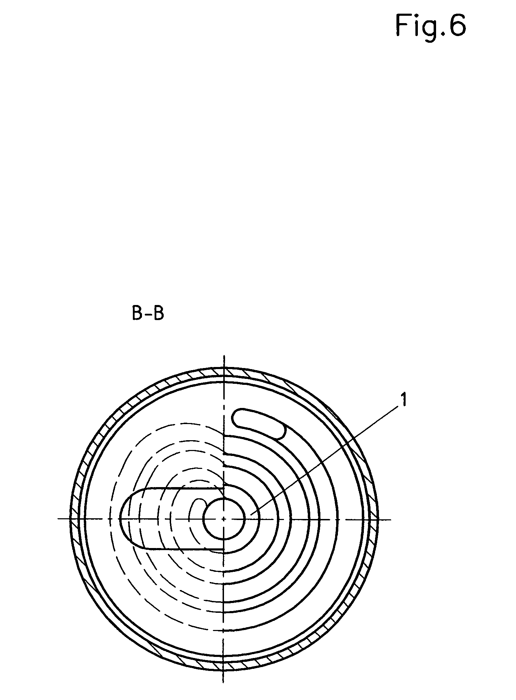

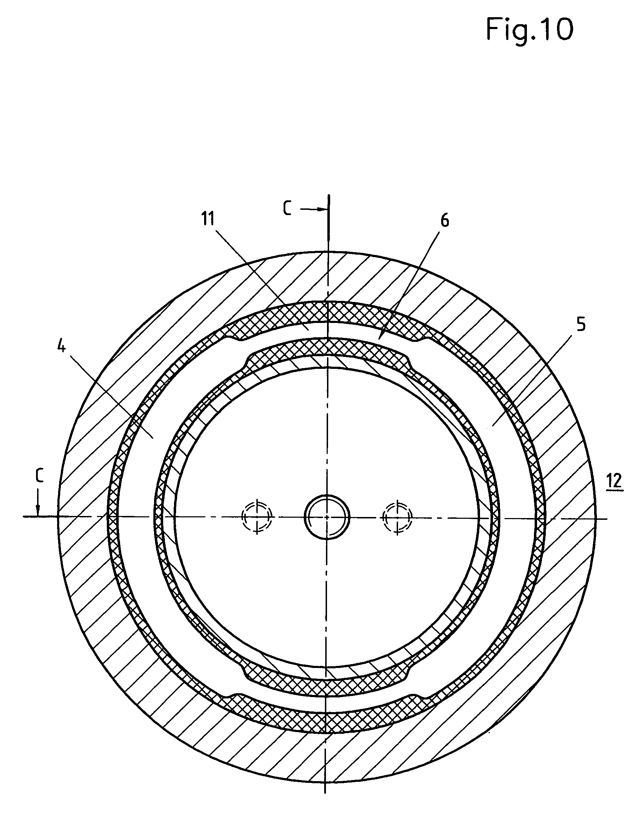

Die Hydrolager aus den Figuren 1 bis 11 umfassen jeweils ein Traglager 1 und ein Auflager 2, die durch den Federkörper 3 miteinander verbunden sind. Der Federkörper 3 besteht aus einem gummielastischen Werkstoff und begrenzt zusammen mit dem Traglager 1 und dem Auflager 2 einen Arbeitsraum 4 und einen Ausgleichsraum 5. Der Arbeitsraum 4 und der Ausgleichsraum 5 sind mit Dämpfungsflüssigkeit gefüllt und durch die Dämpfungseinrichtung 6 flüssigkeitsleitend miteinander verbunden. Die Dämpfungseinrichtung 6 ist bei relativer radialer Verlagerung von Traglager 1 und Auflager 2 zueinander von der Dämpfungsflüssigkeit durchströmbar.

In den Figuren 1 bis 3 ist ein erstes Ausführungsbeispiel eines Hydrolagers gezeigt. Die Dämpfungseinrichtung 6 ist in diesem Ausführungsbeispiel durch eine Trennwand 7 gebildet, die zwischen dem Arbeits- 4 und dem Ausgleichsraum 5 angeordnet ist. Die Trennwand 7 weist einen Dämpfungskanal 8 auf, der zur Dämpfung radial und axial eingeleiteter Schwingungen von der Dämpfungsflüssigkeit durchströmbar ist. Der Arbeits- 4 und der Ausgleichsraum 5 sind in axialer Richtung benachbart zueinander und durch die Trennwand 7 getrennt voneinander angeordnet.

Um eine Dämpfung in radialer Richtung zu erzielen, ist asymmetrisch innerhalb des Arbeitsraums 4 eine sich in axialer Richtung erstreckende, volumenveränderliche Flüssigkeitstasche 9 angeordnet, die im Wesentlichen nierenförmig ausgebildet ist und sich im Wesentlichen halbkreisförmig um den Kern 10 des Traglagers erstreckt.

### Zur Funktion des Hydrolagers wird folgendes ausgeführt:

Bei Einleitung tieffrequenter, großamplitudiger Schwingungen in Achsrichtung des Hydrolagers verlagert sich das Traglager 1 axial in Richtung der Trennwand 7, wodurch Dämpfungsflüssigkeit durch den Dämpfungskanal 8 vom Arbeitsraum 4 in den Ausgleichsraum 5 gefördert wird. Durch die Membran 13, die rollbalgartig ausgebildet ist, wird die Dämpfungsflüssigkeit innerhalb des Ausgleichsraums 5 im Wesentlichen drucklos aufgenommen. Beim Ausfedem des Traglagers 1 wird die zuvor in den Ausgleichsraum 5 geförderte Dämpfungsflüssigkeit durch den Dämpfungskanal 8 wieder zurück in den Arbeitsraum 4 gefördert. Die Hin- und Herverlagerung der Dämpfungsflüssigkeit im Dämpfungskanal 8 vom Arbeitsraum 4 durch den Dämpfungskanal 8 in den Ausgleichsraum und wieder zurück erfolgt gegenphasig zur eingeleiteten Schwingung.

Die Dämpfung von radial eingeleiteten Schwingungen erfolgt derart, dass bei einer radialen Verlagerung des Traglagers 1 bezogen auf das Auflager 2 die Flüssigkeitstasche 9 zunächst zusammengedrückt wird, wodurch die darin befindliche Dämpfungsflüssigkeit durch den Dämpfungskanal 8 in den Ausgleichsraum 5 gedrückt wird. Nimmt das Traglager 1 demgegenüber wieder die hier gezeigte Position ein, wird die zuvor verdrängte Dämpfungsflüssigkeit durch den Dämpfungskanal 8 wieder in den Arbeitsraum und die einen Bestandteil des Arbeitsraums bildende Flüssigkeitstasche 9 aufgenommen.

Das Hydrolager weist einen einfachen und kompakten Aufbau auf und ist dadurch in fertigungstechnischer und wirtschaftlicher Hinsicht besonders vorteilhaft.

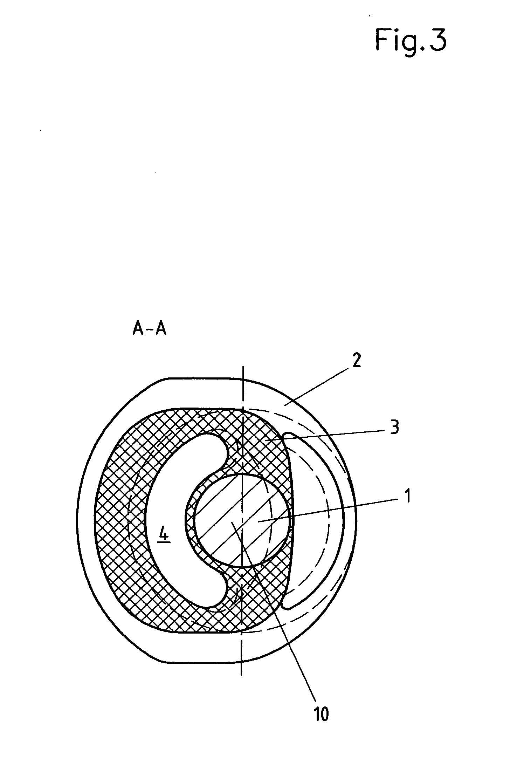

In Figur 3 ist der im Wesentlichen nierenförmige Querschnitt der Flüssigkeitstasche 9 gezeigt, wobei sich die Flüssigkeitstasche 9 im Wesentlichen halbkreisförmig um den Kern 10 des Traglagers 1 erstreckt.

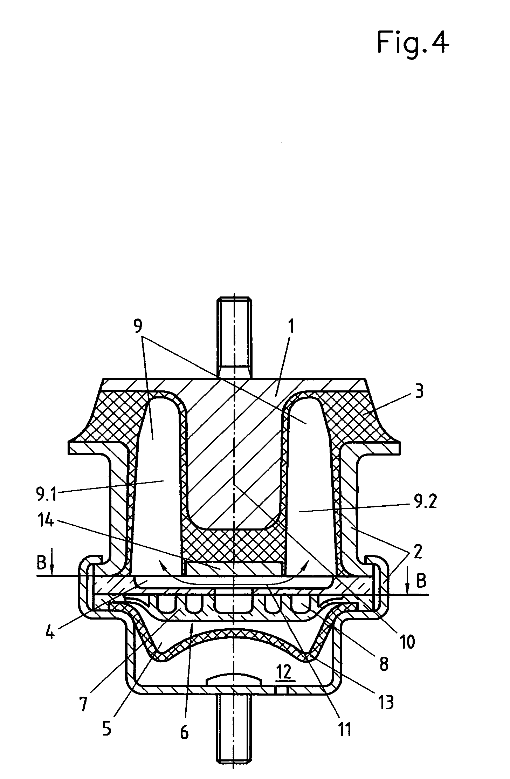

In den Figuren 4 bis 6 ist ein zweites Ausführungsbeispiel eines Hydrolagers gezeigt. Die Flüssigkeitstasche 9 ist in diesem Ausführungsbeispiel zweiteilig ausgebildet und umfasst die Flüssigkeitstaschen 9.1, 9.2, die jeweils nierenförmig ausgebildet sind und sich jeweils im Wesentlichen halbkreisförmig um den Kern 10 des Traglagers 1 erstrecken. Die Flüssigkeitstaschen 9.1, 9.2 sind durch eine Drosselöffnung 11 flüssigkeitsleitend miteinander verbunden, wobei die Drosselöffnung 11 nur zur Dämpfung von in radialer Richtung eingeleiteten Schwingungen von Dämpfungsflüssigkeit durchströmbar ist.

Zur Dämpfung von tieffrequenten, großamplitudigen Schwingungen in axialer Richtung legt sich die Anschlagplatte 14, die beispielsweise aus einem polymeren Werkstoff bestehen kann, auf die Trennwand 7, so dass ein Flüssigkeitsaustausch zwischen den beiden Flüssigkeitstaschen 9.1, 9.2 vermieden wird. Auch ohne diese im Wesentlichen flüssigkeitsdichte Verbindung würde ein Flüssigkeitsaustausch zwischen den beiden Flüssigkeitstaschen 9.1, 9.2 bei Dämpfung von in axialer Richtung eingeleiteten Schwingungen nicht stattfinden, da bei axialer Belastung des Lagers die identisch ausgebildeten Flüssigkeitstaschen 9.1, 9.2 gleichzeitig dieselbe Menge an Dämpfungsflüssigkeit verdrängen und auch wieder aufnehmen. Zur Dämpfung von axial eingeleiteten Schwingungen wird die in den Flüssigkeitstaschen 9.1, 9.2 befindliche Dämpfungsflüssigkeit durch den Dämpfungskanal 8 innerhalb der Trennwand 7 in den Ausgleichsraum 5 gefördert.

In diesem Ausführungsbeispiel erfolgt die Einleitung der Dämpfungsflüssigkeit in den Dämpfungskanal 8 zentral, der Austritt demgegenüber im radial äußeren Bereich der Trennwand 7.

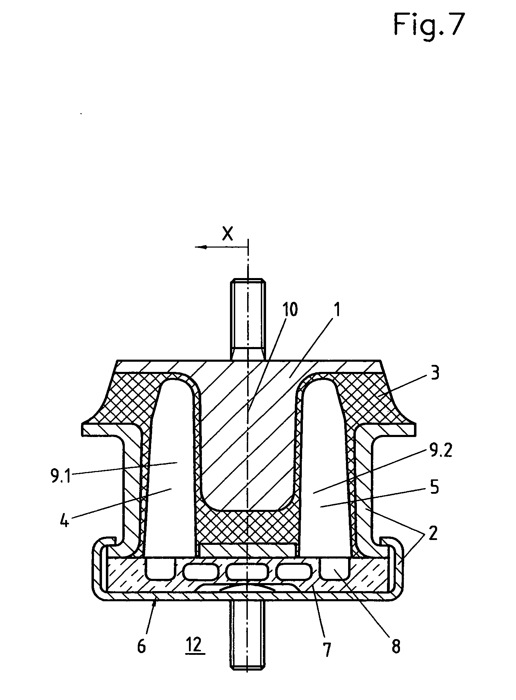

In Figur 7 ist ein vereinfachtes Ausführungsbeispiel eines Hydrolagers gezeigt. Das hier dargestellte Hydrolager ist ausschließlich zur Dämpfung von radial eingeleiteten Schwingungen vorgesehen, wobei sich die beiden Flüssigkeitstaschen 9.1, 9.2 auch in der Funktion von den zuvor in Figur 4 beschriebenen Flüssigkeitstaschen 9.1, 9.2 nicht wesentlich unterscheiden. Die beiden Flüssigkeitstaschen 9.1, 9.2 sind in diesem Ausführungsbeispiel als Arbeitsraum 4 und Ausgleichsraum 5 ausgebildet und durch den Dämpfungskanal 8 innerhalb der Trennwand 7 flüssigkeitsleitend miteinander verbunden. Die Länge und/oder der Querschnitt des Dämpfungskanals 8 sind von den jeweiligen Gegebenheiten des Anwendungsfalles abhängig, wobei die Auslegung und Dimensionierung des Dämpfungskanals 8 vom Fachmann vorgenommen werden kann, ohne dass dieser erfinderisch tätig wird.

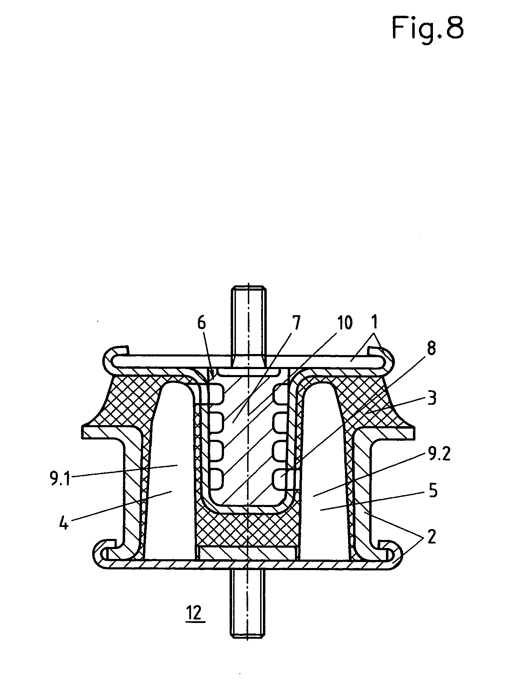

In Figur 8 ist ein weiteres Ausführungsbeispiel gezeigt, das sich vom Ausführungsbeispiel gemäß Figur 7 nur durch die Ausgestaltung und Anordnung der Dämpfungseinrichtung 6 unterscheidet. Die Dämpfungseinrichtung 6 ist in diesem Ausführungsbeispiel im Kern 10 des Traglagers 1 angeordnet und umschließt diesen spiralförmig.
Bei einer radialen Hin- und Herverlagerung des Traglagers 1 bezogen auf das Auflager 2 wird ein Teil der Dämpfungsflüssigkeit aus einer der Flüssigkeitstaschen 9.1 verdrängt, wobei die verdrängte Dämpfungsflüssigkeit durch die andere Flüssigkeitstasche 9.2 aufgenommen wird. Anschließend erfolgt die Flüssigkeitsverlagerung in umgekehrter Richtung. Die Flüssigkeitsverlagerung zwischen den Flüssigkeitstaschen 9.1, 9.2 erfolgt gegenphasig zu der radial eingeleiteten Schwingung.

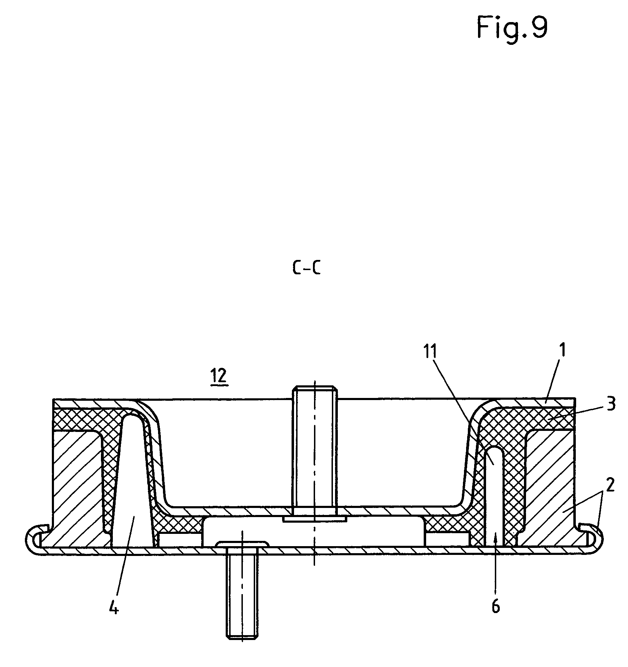

In Figur 9 ist ein weiteres Ausführungsbeispiel eines erfindungsgemäßen Hydrolagers gezeigt. Die Flüssigkeitsverlagerung zwischen den beiden Flüssigkeitstaschen 9.1, 9.2 erfolgt in diesem Ausführungsbeispiel durch eine Drosselöffnung 11 mit im Vergleich zu den Flüssigkeitstaschen 9.1, 9.2 verringertem Querschnitt. Durch die beiden Drosselöffnungen 11, die gleichmäßig in Umfangsrichtung verteilt angeordnet sind, werden bei einer Radialverlagerung von Traglager 1 und Auflager 2 relativ zueinander Bestandteile der Dämpfungsflüssigkeit von der Flüssigkeitstasche 9.1 in die Flüssigkeitstasche 9.2 verlagert und umgekehrt. Begrenzt sind die Drosselöffnungen 11 jeweils durch elastomeren Werkstoff des Federkörpers 3.

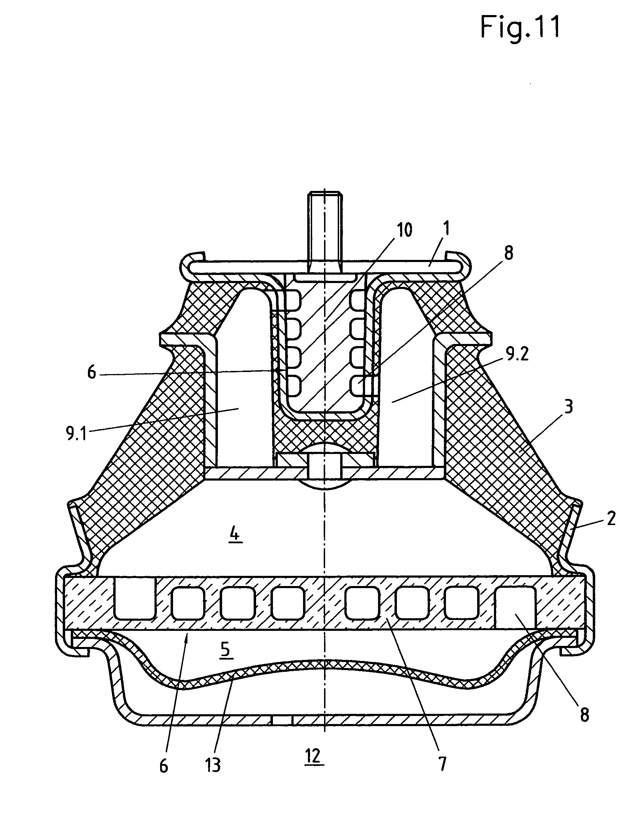

In Figur 11 ist ein Hydrolager gezeigt, das sich von herkömmlichen Hydrolagern, die ausschließlich in axialer Richtung dämpfen, durch eine abweichende Gestalt im Bereich des Traglagers 1 unterscheidet. Die beiden Flüssigkeitstaschen 9.1, 9.2 sind vom Arbeits- 4 und/oder Ausgleichsraum 5 hydraulisch separiert. Die Funktion des Hydrolagers, die die Dämpfung in radialer Richtung bewirkt, entspricht der Funktion des Hydrolagers aus Figur 8. Zur Dämpfung niederfrequenter, großamplitudiger Schwingungen, die in axialer Richtung in das Hydrolager eingeleitet werden, erfolgt eine Verlagerung der Dämpfungsflüssigkeit vom Arbeitsraum 4 in den Ausgleichsraum 5 und umgekehrt. Dadurch, dass die Dämpfungsflüssigkeit innerhalb der Flüssigkeitstaschen 9.1, 9.2 von der Dämpfungsflüssigkeit innerhalb des Arbeits- 4 und Ausgleichsraum 5 getrennt ist, können beispielsweise Dämpfungsflüssigkeiten mit unterschiedlicher Viskosität zur Anwendung gelangen. Hierbei ist von Vorteil, dass sowohl die Dämpfung in axialer Richtung als auch die Dämpfung in radialer Richtung optimal an die jeweiligen Gegebenheiten des Anwendungsfalles angepasst werden können.

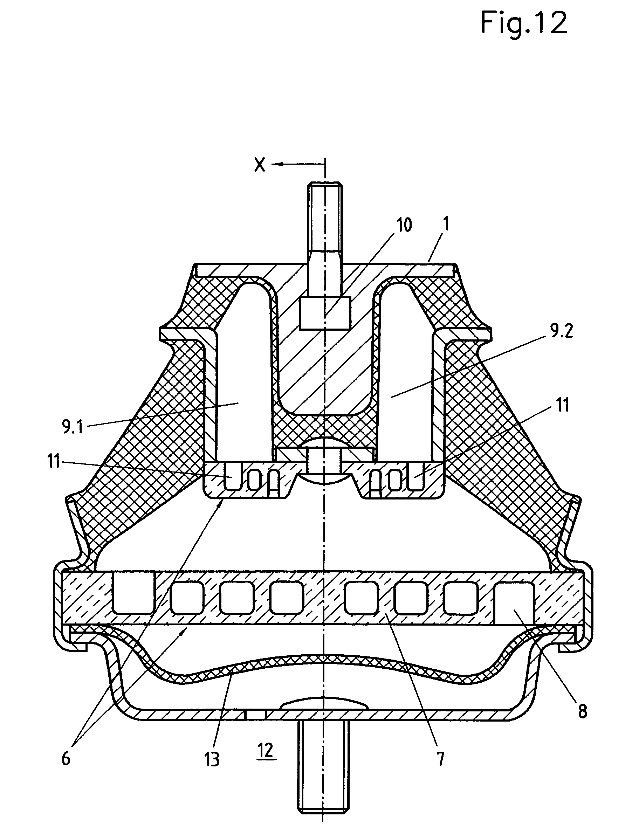

In Figur 12 ist ein weiteres Ausführungsbeispiel eines Hydrolagers gezeigt, das sich vom Hydrolager aus Figur 11 dadurch unterscheidet, dass jede der Flüssigkeitstaschen 9.1, 9.2 hydraulisch mit dem Arbeitsraum 4 durch jeweils eine Drosselöffnung 11 verbunden ist. Die Drosselöffnung 11 kann dabei unterschiedlich gestaltet sein, beispielsweise als Drosselblende oder kanalförmig, wie hier beispielsweise dargestellt. Bei einer Verlagerung des Traglagers 1 radial zum Auflager 2 wird die Dämpfungsflüssigkeit aus einer der Flüssigkeitstaschen 9.1 und durch die in axialer Richtung anschließende Drosselöffnung 11 in den Arbeitsraum 4 geleitet, wobei das in den Arbeitsraum 4 verdrängte Volumen durch die gleichzeitige Vergrößerung der zweiten Flüssigkeitstaschen 9.2 durch die entsprechende Drosselöffnung 11 aus dem Arbeitsraum 4 gefördert und in der zweiten Flüssigkeitstasche 9.2 aufgenommen wird. Ist der Strömungswiderstand der Drosselöffnung 11 sehr groß, ebenso wie die Steifigkeit des Federkörpers 3, funktioniert das hier dargestellte Hydrolager wie das Hydrolager aus Figur 7. Die Dämpfungsflüssigkeit wird zwischen den Flüssigkeitstaschen 9.1 und 9.2 hin- und hergepumpt. Ist demgegenüber der Strömungswiderstand der Drosselöffnung 11 vergleichsweise klein, ebenso wie die Federsteifigkeit des Federkörpers 3, wirkt der Arbeitsraum 4 als Ausgleichskammer zu den Flüssigkeitstaschen 9.1 und 9.2.

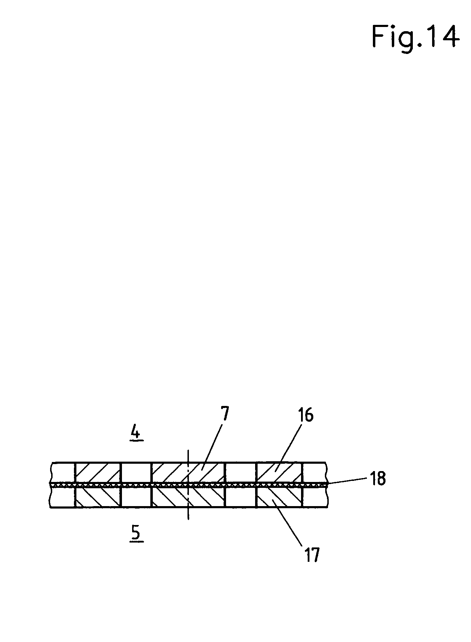

In Figur 14 ist eine alternative Ausgestaltung einer Trennwand 7 gezeigt, die durch einen Düsenkäfig gebildet ist, wobei die Trennwand 7 aus einem Oberteil 16 und einem Unterteil 17 besteht, die in axialer Richtung zur Isolierung höherfrequenter, kleinamplitudiger Schwingungen durch eine in axialer Richtung schwingfähige Membran 18 getrennt sind. Diese Trennwand 7 aus Figur 14 kann alternativ anstelle der Trennwände 7 aus den Figuren 1 bis 6 und 11 bis 13 zur Anwendung gelangen.

## Patentansprüche

1. Hydrolager, umfassend ein Traglager und ein Auflager, die durch einen Federkörper aus gummielastischem Werkstoff miteinander verbunden sind und zumindest einen Arbeitsraum und zumindest einen Ausgleichsraum begrenzen, wobei der Arbeits- und der Ausgleichsraum jeweils mit Dämpfungsflüssigkeit gefüllt und durch eine Dämpfungseinrichtung flüssigkeitsleitend verbunden sind, wobei die Dämpfungseinrichtung (6) bei relativer radialer Verlagerung von Traglager (1) und Auflager (2) zueinander von der Dämpfungsflüssigkeit durchströmbar ist, **dadurch gekennzeichnet, dass** der Arbeitsraum (4) zumindest eine sich in axialer Richtung erstreckende, volumenveränderliche Flüssigkeitstasche (9) aufweist.

2. Hydrolager nach Anspruch 1, **dadurch gekennzeichnet, dass** die Dämpfungseinrichtung (6) durch eine Trennwand (7) zwischen Arbeits- (4) und Ausgleichsraum (5) gebildet ist und dass die Trennwand (7) zumindest einen Dämpfungskanal (8) aufweist.

3. Hydrolager nach einem der Ansprüche 1 oder 2, **dadurch gekennzeichnet, dass** der Arbeits- (4) und der Ausgleichsraum (5) in axialer Richtung benachbart zueinander und durch die Trennwand (7) getrennt voneinander angeordnet sind.

4. Hydrolager nach Anspruch 1, **dadurch gekennzeichnet, dass** die Flüssigkeitstasche (9) im Wesentlichen nierenförmig ausgebildet ist und sich im Wesentlichen halbkreisförmig um den Kern (10) des Traglagers (1) erstreckt.

5. Hydrolager nach einem der Ansprüche 1 bis 4, **dadurch gekennzeichnet, dass** der Arbeitsraum (4) zwei sich in axialer Richtung erstreckende volumenveränderliche Flüssigkeitstaschen (9.1, 9.2) aufweist, die durch zumindest eine Drosselöffnung (11) verbunden sind.

6. Hydrolager nach einem der Ansprüche 1 bis 5, **dadurch gekennzeichnet, dass** der Dämpfungskanal (8) oder die Drosselöffnung (11) im Kern des Traglagers (1) angeordnet sind.

7. Hydrolager nach einem der Ansprüche 1 bis 6, **dadurch gekennzeichnet, dass** der Dämpfungskanal (8) oder die Drosselöffnung (11) gewendelt im Kern (1) verlaufen.

8. Hydrolager nach einem der Ansprüche 5 bis 7, **dadurch gekennzeichnet, dass** die beiden Flüssigkeitstaschen (9.1, 9.2) flüssigkeitsleitend mit dem Arbeitsraum (4) verbunden sind.

9. Hydrolager nach einem der Ansprüche 5 bis 8, **dadurch gekennzeichnet, dass** jede der Flüssigkeitstaschen (9.1, 9.2) durch einen Dämpfungskanal (8) flüssigkeitsleitend mit dem Arbeitsraum (4) verbunden ist.

10. Hydrolager nach einem der Ansprüche 1 bis 9, **dadurch gekennzeichnet, dass** der Ausgleichsraum (5) auf der der Umgebung (12) zugewandten Seite durch eine rollbalgartig ausgebildete, im Wesentlichen drucklos Volumen aufnehmende Membran (13) begrenzt ist.
